# EUROPÄISCHE PATENTSCHRIFT

(11) **EP 2 627 461 B1**
(45) Veröffentlichungstag und Bekanntmachung des Hinweises auf die Patenterteilung: **06.08.2014**
(21) Anmeldenummer: 11764576.2
(22) Anmeldetag: 06.10.2011
(51) Int. Cl.: B21D 39/04, F16B 17/00, B62D 27/02

(54) **VERFAHREN ZUM FÜGEN VON BAUTEILEN AUS HOCHFESTEM STAHL**
METHOD FOR JOINING COMPONENTS MADE OF HIGH-STRENGTH STEEL
PROCÉDÉ POUR ASSEMBLER DES PIÈCES EN ACIER À RÉSISTANCE ÉLEVÉE

(30) Priorität: 15.10.2010 DE 102010042538
(43) Veröffentlichungstag der Anmeldung: 21.08.2013
(73) Patentinhaber: Ford Global Technologies, LLC, Dearborn, MI 48126 (US)
(72) Erfinder: LANZERATH, Horst, Heribert, 53902 Bad Münstereifel (DE); SCHENK, Jochen, 53229 Bonn (DE)
(74) Vertreter: Dörfler, Thomas
(86) Internationale Anmeldenummer: PCT/EP2011/067453
(87) Internationale Veröffentlichungsnummer: WO 2012/049065

(56) Entgegenhaltungen:
- EP-A1- 0 995 666
- EP-A1- 1 043 092
- DE-A1- 19 721 478
- FR-A1- 2 670 541
- US-A1- 2008 120 844

## Beschreibung

Die Erfindung betrifft ein Verfahren zum Fügen von Hohlprofilen aus hochfestem Stahl, insbesondere zu einem Kraftfahrzeug-Rahmen, wobei die Hohlprofile miteinander gegen ein Ausziehen formschlüssig miteinander durch Quetschen bzw. Verpressen (crimpen) in einer Verbindungszone verbunden werden.

Wenn nachfolgend von hochfestem Stahl die Rede ist, soll darunter Stahl verstanden werden, wie er auch als AHSS (Advanced High Strength Steel) oder UHSS (Ultra High Strength Steel) bekannt ist. Solche Stähle werden auch als dualphase (DP, Zweiphasen-Stahl), transformation induced plasticity (TRIP, Restaustenit-Stahl), high hole extension (HHE), complex phase (CP, Komplexphasen Stahl), high strength low alloy (HSLA), Mehrphasenstahl, MartensitPhasen Stahl und Boron Steel (wenige ppm Bor enthaltende Stahllegierungen, wie z.B. Low carbon manganese boron BS3111 Type 9 und Medium carbon manganese boron BS3111 Type 10 grades von CORUS) etc. bezeichnet. Es versteht sich, dass alle größeren Stahlerzeuger eigene Bezeichnungen und Qualitäten haben, diese sich jedoch wesentlich entsprechen.

Diese unterschiedlichen Stähle haben üblicherweise eine Zugfestigkeit, die im Gegensatz zum "normalen" Stahl höher als 300 MPa bei AHSS Stählen und sogar höher als 700 MPa bei UHSS Stählen bis sogar über 1400 MPa bei Boron Steel und Martensitphasen-Stahl liegt.

Die Festigkeit der Stähle wird üblicherweise durch eine Wärmebehandlung erreicht, innerhalb derer der Stahl abgeschreckt und an der Umwandlung in eine weniger feste Phase gehindert wird. Daher ist es nicht empfohlen, diese Stähle später in der Verarbeitung über längere Zeit und stärker zu erhitzen, da sie dann erhebliche Festigkeitseinbußen erleiden.

Aus vielerlei Gründen ist es jedoch gewünscht, insbesondere im Automobilbau, leichte und hochfeste Stähle einzusetzen. Diese ermöglichen trotz Gewichtsreduktion durch Materialersparnis eine hochfeste Karosserie (oder andere Bauteile), die u. A. die steigenden Crashtest-Anforderungen erfüllen. Dies spart zudem Treibstoff und verringert CO₂- und andere Treibhausgas-Emissionen.

Dazu ist es bekannt Stahlbleche aus hochfesten Stählen zu Karosserieteilen zusammenzuschweißen.

Allerdings ist es nicht einfach, hochfeste Stähle zu formen und anschließend zu schweißen.

Daher ist es aus der DE 195 06 160 A1 bekannt, eine Karosserie als Rahmenkonstruktion aus Hohlprofilen herzustellen, wobei die Hohlprofile ineinander gesteckt und anschließend verschweißt werden.

Allerdings ist das Schweißen an sich nicht unproblematisch.

Aus der EP 0 995 666 A1 ist z.B. ein Verfahren zur Verbindung von zwei oder mehr Bauteilen einer als Rohrrahmen ausgebildeten Fahrzeugkarosserie oder eines Fahrwerks bekannt, die über eine Steckverbindung miteinander verbunden und zusätzlich fixiert werden, wobei ein an der Verbindungsstelle im Überlappungs- und Kontaktbereich der Bauteile angeordnetes Verbindungselement beim Zusammenführen der Bauteile zunächst inaktiv ist und nach Schaffen der Steckverbindung extern aktiviert wird und die Steckverbindung fixiert.

Aus der DE 197 21 478 A1 ist ein Verfahren zum Verbinden von Hohlprofilen bekannt, insbes. zu einem Fahrzeugrahmen, wobei die Hohlprofilenden äußerer Hohlprofile formschlüssig auf innere Hohlprofilenden aufgeschoben werden und diese jeweils miteinander gegen ein Ausziehen formschlüssig miteinander verbunden werden, wobei in die inneren Hohlprofilenden jeweils mindestens eine Tasche eingebracht wird und dazu zentriert und passend jeweils in die äußeren Hohlprofilenden ein Buckel oder eine Sicke eingedrückt wird und der Buckel oder die Sicke in die zugehörige Tasche verrastend eingebracht oder, die Tasche als Matrize nutzend, darin ausgebildet wird. Zusätzlich wird eine Verklebung der Knoten durchgeführt.

Es wird also eine Art Crimp-Bonding (bördeln, quetschen, klemmen etc.) eingesetzt, um die Teile zu verbinden, was aufgrund der Einfachheit und Kosten zu bevorzugen wäre.

Problematisch ist allerdings, dass sich gehärtete hochfeste Stähle nicht gut nach dieser Methode fügen lassen. Es treten Materialrisse und Brüche auf. Auch neigt das Material dabei zu schwächenden Spannungen.

Aufgabe der Erfindung ist es, demgegenüber ein Verfahren zum Fügen von Bauteilen bereitzustellen, das auch für hochfeste Stähle geeignet ist und die resultierenden Bauteile trotzdem nicht schwächt. Zudem soll das Verfahren einfach und wirtschaftlich einsetzbar sein.

Diese Aufgabe wird durch das in Anspruch 1 wiedergegebene Verfahren gelöst.

Dadurch, dass ein Ende mindestens eines der Hohlprofile eine weiche Verbindungszone, zumindest während des Quetschens, für das Quetschen aufweist, ist es möglich, das Hot-Crimping auch für hochfeste Stähle, wie UHSS und AHSS Stähle einzusetzen.

Es wird also bei den Hohlprofilen bzw. Adaptern (auch Knoten genannt) eine nicht gehärtete und somit weiche Zone zur Verbindung durch das Quetschen vorgesehen. Somit treten in dieser Verbindungszone keine oder nur sehr wenige beherrschbare Materialrisse oder Brüche sowie Spannungen auf.

Somit lassen sich die Hohlprofile zu hohlen Rahmenkonstruktionen für Kraftfahrzeugkarosserien, sogenannte Space Frames, zusammenfügen, ohne dass geschweißt werden muss oder die sonst üblichen Bleche zum Einsatz kommen.

Das weiche nichtgehärtete Material in der Verbindungszone kann während des Quetschens (Hot-Form-Quetschen) oder anschließend (lokal) nachgehärtet werden, wodurch im Verbindungsbereich dieselbe Festigkeit des übrigen Materials der Hohlprofile bzw. Adapter erreichbar ist.

Alternativ kann auch nur der Knoten aufgeheizt werden, über die beiden Enden der Hohlprofile gesteckt und dann in einem Warmumformprozeß mit den Hohlprofilen im heißen Zustand verquetscht werden; Fügen und Härten erfolgen in einem Schritt. Während des Warmumformprozesses wird dabei der Knoten verformt und gleichzeitig abgeschreckt, wodurch der Knoten den Hohlprofilen vergleichbare mechanische Eigenschaften erhält. Durch das Abschrecken kann zudem ein Aufschrumpfen des Knotens auf die Hohlprofile stattfinden, so daß sich neben dem Quetschen noch ein zusätzlicher Kraftschluss durch die Schrumpfspannungen ergeben kann. Des Weiteren kann die Form von Knoten und Hohlprofilenden so gestaltet werden, z.B. durch umlaufenden Nuten im Hohlprofil und entsprechend geformtem Knoten, daß zusätzlich noch Formschluss erzielt werden kann.

Alternativ kann auch auf ein Härten verzichtet werden, wenn durch die Materialaufdopplung in der Verbindungszone eine ausreichend hohe Steifigkeit etc. erreicht wird.

Zusätzlich kann im Bereich der mindestens einen weichen Verbindungszone ein Klebstoff eingebracht werden, um die Verbindung der Bauteile zu verbessern. Dabei kann der Klebstoff in Form von adhäsiven Klebebändern (tapes) auf die Hohlprofilenden aufgebracht werden.

Im Rahmen der Erfindung sind unterschiedliche, vorteilhafte Ausführungsformen denkbar:
A) Ein erstes Hohlprofilende wird formschlüssig auf zweites Hohlprofilende aufgeschoben, wobei das erste Hohlprofilende die weiche Verbindungszone aufweist.
B) Ein erstes Hohlprofilende wird formschlüssig auf zweites Hohlprofilende aufgeschoben, wobei beide Hohlprofilenden jeweils eine weiche Verbindungszone aufweisen.
C) Ein erstes Hohlprofilende und ein zweites Hohlprofilende werden formschlüssig auf einen Verbindungsadapter aufgeschoben oder in einen Verbindungsadapter eingeschoben und im Bereich des Verbindungsadapters wird gequetscht, wobei der Adapter aus weichem "normalen" Stahl besteht und die Hohlprofilenden jeweils eine weiche Verbindungszone aufweisen.
D) Ein erstes Hohlprofilende und ein zweites Hohlprofilenden formschlüssig auf einen Verbindungsadapter aufgeschoben oder in einen Verbindungsadapter eingeschoben werden und im Bereich des Verbindungsadapters gequetscht wird, wobei der Adapter ebenfalls aus hochfestem Stahl besteht und die Hohlprofilenden sowie der Adapter jeweils weiche Verbindungszonen aufweisen.
E) Ein erstes Hohlprofilende und ein zweites Hohlprofilenden formschlüssig auf einen Verbindungsadapter aufgeschoben oder in einen Verbindungsadapter eingeschoben werden und im Bereich des Verbindungsadapters gequetscht wird, wobei der Adapter ebenfalls aus haertbarem hochfestem Stahl besteht und die Hohlprofilenden sowie der Adapter jeweils weiche Verbindungszonen aufweisen. Im Anschluß wird die Verbindungszone gehärtet.
F) Ein erstes Hohlprofilende und ein zweites Hohlprofilenden formschlüssig auf einen auf Austenitsierungstemperatur erwärmten Verbindungsadapter aus haertbarem Stahl aufgeschoben oder in einen solchen Verbindungsadapter eingeschoben werden und im Bereich des Verbindungsadapters gequetscht und gleichzeitig gehärtet wird.

Weitere vorteilhafte Merkmale, Einzelheiten und Vorteile der Erfindung ergeben wich aus der nachfolgenden Beschreibung von Ausführungsbeispielen anhand der Zeichnung, in der
- Figur 1: eine schematische Ansicht einer Ausführungsform der Erfindung zeigt;
- Figur 2: eine schematische Ansicht einer zweiten Ausführungsform der Erfindung zeigt;
- Figur 3: eine schematische Ansicht einer weiteren Ausführungsform der Erfindung zeigt; und
- Figur 4: eine schematische Ansicht einer weiteren Ausführungsform der Erfindung zeigt.

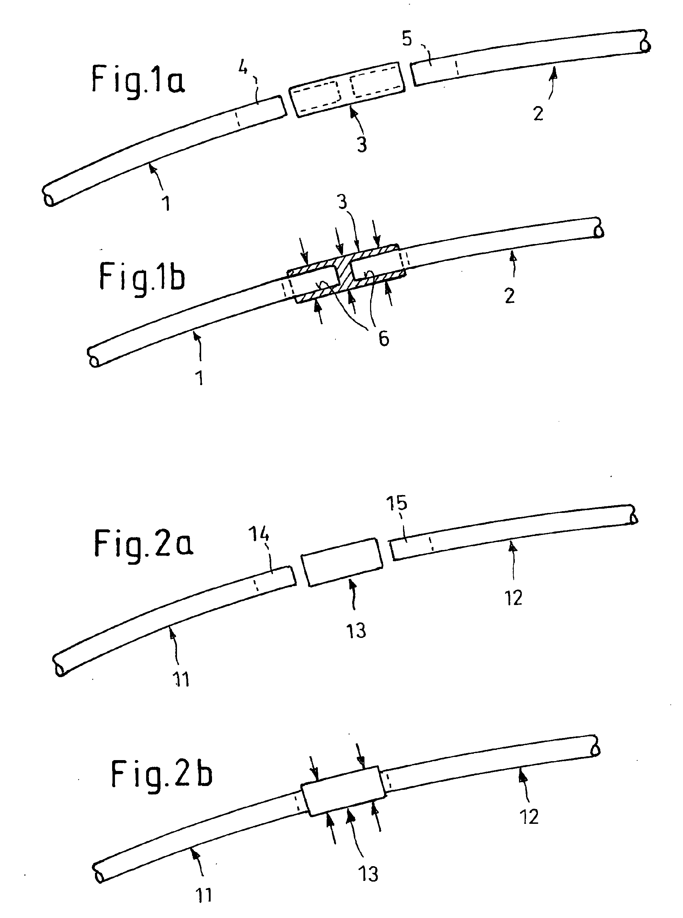

In der Figur 1 ist eine schematische Ansicht einer ersten Ausführungsform der Erfindung vor dem Zusammensetzen (Figur 1 a) und beim Fügen (Figur 1 b) gezeigt.

In den Figuren 1a und 1b sind zwei Hohlprofile 1 und 2 aus Boron Stahl und ein Adapter 3 aus ungehärtetem Boron-Stahl gezeigt, in den die Enden 4, 5 der Hohlprofile 1 und 2 eingeschoben werden. Die Enden 4, 5 der Hohlprofile 1 und 2 besitzen jeweils eine weiche Verbindungszone für das Quetschen, in der der Boron Stahl ungehärtet ist. Mit dieser Zone werden die Enden 4, 5 in den Adapter 3 eingeschoben.

Anschließend wird gequetscht (angedeutet durch die Pfeile in Figur 1 b), in dem auf bekannte Weise von außen auf den Adapter Druck ausgeübt wird, wodurch sich der Adapter 3 und die weichen Zonen 4, 5 verformen und die Hohlprofile 1, 2 mit dem Adapter 3 gegen ein Ausziehen formschlüssig miteinander im Bereich der Verbindungszone verbunden werden. Durch die Materialaufdopplung im Verbindungsbereich wird eine ausreichend hohe Steifigkeit und feste Verbindung erreicht. Es versteht sich, dass der Adapter auch ausgestaltet sein kann, um mehr als zwei Teile zu verbinden.

In der Ausführungsform nach Figur 2 wird im Unterschied ein Adapter 13 eingesetzt, der aus ungehärtetem Boron Stahl besteht.

In den Figuren 2a und 2b sind zwei Hohlprofile 11 und 21 und ein Adapter 13 allesamt aus ungehärtetem Boron Stahl gezeigt. In den Adapter 13 werden die Enden 14, 15 der Hohlprofile 11 und 12 eingeschoben.

Anschließend wird gequetscht (angedeutet durch die Pfeile in Figur 2b), in dem auf bekannte Weise von außen auf den Adapter Druck ausgeübt wird, wodurch sich der Adapter 13 und die weichen Zonen 14, 15 verformen und die Hohlprofile 11, 12 mit dem Adapter 13 gegen ein Ausziehen formschlüssig miteinander im Bereich der Verbindungszone verbunden werden. Anschließend wird der Verbund der Teile 11, 12 und 13 gehärtet. Damit werden homogene Materialeigenschaften erreicht.

Alternativ können die in den Figuren 2a und 2b gezeigten zwei Hohlprofile 11 und 21 aus bereits gehärtetem Boron Stahl und ein Adapter 13 aus ungehärtetem Boron-Stahl sein. In den Adapter 13 werden die Enden 14, 15 der Hohlprofile 11 und 12 eingeschoben.

Anschließend wird gequetscht (angedeutet durch die Pfeile in Figur 2b), in dem auf bekannte Weise von außen auf den Adapter Druck ausgeübt wird, wodurch sich der Adapter 13 und die weichen Zonen 14, 15 verformen und die Hohlprofile 11, 12 mit dem Adapter 13 gegen ein Ausziehen formschlüssig miteinander im Bereich der Verbindungszone verbunden werden. Anschließend wird der Verbund der Teile 11, 12 und 13 gehärtet. Damit werden homogene Materialeigenschaften erreicht.

Als weitere Variante können die in den Figuren 2a und 2b gezeigten zwei Hohlprofile 11 und 21 ebenfalls aus bereits gehärtetem Boron Stahl und ein Adapter 13 aus ungehärtetem Boron Stahl sein. In den auf Austenitisierungstemperatur erwärmten Adapter 13 werden die Enden 14, 15 der Hohlprofile 11 und 12 eingeschoben.

Anschließend wird gequetscht (angedeutet durch die Pfeile in Figur 2b), in dem auf bekannte Weise von außen auf den Adapter Druck ausgeübt wird, wodurch sich der Adapter 13 und die weichen Zonen 14, 15 verformen und die Hohlprofile 11, 12 mit dem Adapter 13 gegen ein Ausziehen formschlüssig miteinander im Bereich der Verbindungszone verbunden werden. Gleichzeitig wird der Adapter abgekühlt und damit gehärtet. Dadurch wird gleichzeitig ein Aufschrumpfen des Adapters auf die Hohlprofile erreicht, welches zu erhöhtem Kraftschluss führt. Zudem werden homogene Materialeigenschaften in Adapter und Hohlprofilen erreicht.

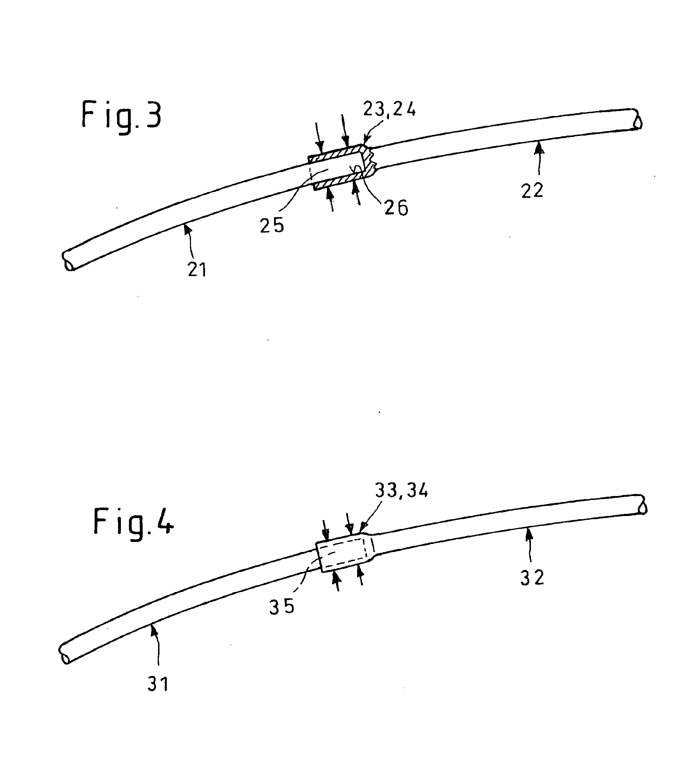

In der Figur 3 ist eine schematische Ansicht einer weiteren Ausführungsform der Erfindung beim Fügen gezeigt.

Ein Hohlprofil 22 aus gehärtetem Boron Stahl weist an einem Ende 24 ein Innendurchmesseraufweitung 23 auf, in die ein zweites Hohlprofil 21 aus gehärtetem Boron Stahl mit seinem Ende 25 eingeschoben wird und die quasi als Adapter fungiert. Das Ende 24 des Hohlprofils 22 ist eine weiche Verbindungszone für das Quetschen, in der der Boron Stahl ungehärtet ist. Diese Zone 24 wird zudem mit Klebstoff 26 versehen.

Anschließend wird gequetscht (angedeutet durch die Pfeile in Figur 3), in dem auf bekannte Weise von außen auf den Adapter Druck ausgeübt wird, wodurch sich die Innendurchmesseraufweitung 23 verformt und die Hohlprofile 21, 22 gegen ein Ausziehen formschlüssig miteinander im Bereich der Verbindungszone verbunden werden. Durch die Materialaufdopplung und Klebung im Verbindungsbereich wird eine ausreichend hohe Steifigkeit und feste Verbindung erreicht.

In der Figur 4 ist eine schematische Ansicht einer weiteren Ausführungsform der Erfindung beim Fügen gezeigt.

Ein Hohlprofil 32 aus ungehärtetem Boron Stahl weist an einem Ende 34 ein Innendurchmesseraufweitung 33 auf, in die ein zweites Hohlprofil 31 aus ungehärtetem Boron Stahl mit seinem Ende 35 eingeschoben wird und die quasi als Adapter fungiert. Das Ende 34 des Hohlprofils 32 und das Ende 35 des Hohlprofils 32 sind weiche Verbindungszonen für das Quetschen.

Anschließend wird gequetscht (angedeutet durch die Pfeile in Figur 4), in dem auf bekannte Weise von außen auf den Adapter Druck ausgeübt wird, wodurch sich die Innendurchmesseraufweitung 33 verformt und die Hohlprofile 31, 32 gegen ein Ausziehen formschlüssig miteinander im Bereich der Verbindungszone verbunden werden.

Anschließend wird der Verbund der Teile 31 und 32 gehärtet. Somit werden homogene Materialeigenschaften erreicht.

## Patentansprüche

1. Verfahren zum Fügen von Hohlprofilen (1, 2; 11, 21; 22, 23; 31, 32) aus hochfestem Stahl, insbesondere zu einem Kraftfahrzeug-Rahmen, wobei die Hohlprofile (1, 2; 11, 21; 22, 23; 31, 32) miteinander gegen ein Ausziehen formschlüssig miteinander durch Quetschen (crimpen) in einer Verbindungszone (4, 5; 14, 15;) verbunden werden,
**dadurch gekennzeichnet, daß**
ein Ende mindestens eines der Hohlprofile (1, 2; 11, 21; 22; 31, 32) eine Verbindungszone (4, 5; 14, 15; 24; 34, 35) aus weichem nichtgehärtetem Material für das Quetschen aufweist.

2. Verfahren nach Anspruch 1, **dadurch gekennzeichnet, daß** die mindestens eine weiche Verbindungszone (4, 5; 14, 15; 24; 34, 35) nach dem Fügen gehärtet wird.

3. Verfahren nach Anspruch 1 oder 2, **dadurch gekennzeichnet, daß** ein erstes Hohlprofilende (24) formschlüssig auf zweites Hohlprofilende (25) aufgeschoben wird, wobei das erste Hohlprofilende (24) die weiche Verbindungszone aufweist.

4. Verfahren nach Anspruch 1 oder 2, **dadurch gekennzeichnet, daß** ein erstes Hohlprofilende (34) formschlüssig auf zweites Hohlprofilende (35) aufgeschoben wird, wobei beide Hohlprofilenden (34, 35) jeweils eine weiche Verbindungszone aufweisen.

5. Verfahren nach Anspruch 1 oder 2, **dadurch gekennzeichnet, daß** ein erstes Hohlprofilende (4, 11) und ein zweites Hohlprofilende (5, 12) formschlüssig auf einen Verbindungsadapter (3, 13) aufgeschoben oder in einen Verbindungsadapter (3, 13) eingeschoben werden und im Bereich des Verbindungsadapters (3, 13) gequetscht wird, wobei der Adapter (3, 13) aus weichem "normalen" Stahl besteht und die Hohlprofilenden (4, 5; 11, 12) jeweils eine weiche Verbindungszone aufweisen.

6. Verfahren nach Anspruch 1 oder 2, **dadurch gekennzeichnet, daß** ein erstes Hohlprofilende (11) und ein zweites Hohlprofilende (12) formschlüssig auf einen Verbindungsadapter aufgeschoben oder in einen Verbindungsadapter (13) eingeschoben werden und im Bereich des Verbindungsadapters (13) gequetscht wird, wobei der Adapter aus härtbarem Stahl, insbesondere Boron-Stahl, besteht und vor dem Fügen auf Austenitisierungstemperatur gebracht wird und beim Fügen abgeschreckt und damit gehärtet wird.

7. Verfahren nach Anspruch 1 oder 2, **dadurch gekennzeichnet, daß** ein erstes Hohlprofilende (4) und ein zweites Hohlprofilenden (5) formschlüssig auf einen Verbindungsadapter aufgeschoben oder in einen Verbindungsadapter (3) eingeschoben werden und im Bereich des Verbindungsadapters (3) gequetscht wird, wobei der Adapter (3) ebenfalls aus hochfestem Stahl besteht und die Hohlprofilenden (4, 5) sowie der Adapter (3) jeweils weiche Verbindungszonen aufweisen.

8. Verfahren nach einem der vorhergehenden Ansprüche,
**dadurch gekennzeichnet, daß**
im Bereich der mindestens einen weichen Verbindungszone (24) zusätzlich ein Klebstoff (26) eingebracht wird.

9. Verfahren nach Anspruch 8, **dadurch gekennzeichnet, daß** der Klebstoff in Form von adhäsiven Klebebändern auf die Hohlprofilenden aufgebracht wird.

## Claims

1. Method for the joining of hollow profiles (1, 2; 11, 21; 22, 23; 31, 32) made from high-strength steel, in particular to form a motor vehicle frame, the hollow profiles (1, 2; 11, 21; 22, 23; 31, 32) being connected to one another, positively against being pulled out, by pinching (crimping) in a connection zone (4, 5; 14, 15),
**characterized in that** one end of at least one of the hollow profiles has (1, 2; 11, 21; 22, 23; 31, 32) a connection zone (4, 5; 14, 15; 24; 34, 35) made of soft unhardened material for pinching.

2. Method according to Claim 1,
**characterized in that** the at least one soft connection zone (4, 5; 14, 15; 24; 34, 35) is hardened after joining.

3. Method according to Claim 1 or 2,
**characterized in that** a first hollow profile end (24) is pushed positively onto a second hollow profile end (25), the first hollow profile end (24) having the soft connection zone.

4. Method according to Claim 1 or 2,
**characterized in that** a first hollow profile end (34) is pushed positively onto a second hollow profile end (35), the two hollow profile ends (34, 35) having in each case a soft connection zone.

5. Method according to Claim 1 or 2,
**characterized in that** a first hollow profile end (4, 11) and a second hollow profile end (5, 12) are positively pushed onto a connection adapter (3, 13) or pushed into a connection adapter (3, 13), and pinching is carried out in the region of the connection adapter (3, 13), the adapter (3, 13) being composed of soft "normal" steel and the hollow profile ends (4, 5; 11, 12) having in each case a soft connection zone.

6. Method according to Claim 1 or 2,
**characterized in that** a first hollow profile end (11) and a second hollow profile end (12) are positively pushed onto a connection adapter or pushed into a connection adapter (13), and pinching is carried out in the region of the connection adapter (13), the adapter being composed of hardenable steel, in particular boron steel, and being brought to austenizing temperature before joining and being quenched and consequently hardened during joining.

7. Method according to Claim 1 or 2,
**characterized in that** a first hollow profile end (4) and a second hollow profile end (5) are positively pushed onto a connection adapter or pushed into a connection adapter (3), and pinching is carried out in the region of the connection adapter (3), the adapter (3) likewise being composed of high-strength steel and the hollow profile ends (4, 5) and the adapter (3) having in each case soft connection zones.

8. Method according to one of the preceding claims,
**characterized in that** an adhesive (26) is additionally introduced in the region of the at least one soft connection zone (24).

9. Method according to Claim 8,
**characterized in that** the adhesive is applied in the form of adhesive tapes to the hollow profile ends.

## Revendications

1. Procédé pour assembler des profilés creux (1, 2 ; 11, 21 ; 22, 23 ; 31, 32) en acier à résistance élevée, en particulier pour produire un châssis de véhicule automobile, les profilés creux (1, 2 ; 11, 21 ; 22, 23 ; 31, 32) étant connectés les uns aux autres par engagement par correspondance de forme pour empêcher leur désassemblage par écrasement (sertissage) dans une zone de connexion (4, 5 ; 14, 15),
**caractérisé en ce**
**qu'**une extrémité d'au moins l'un des profilés creux (1, 2 ; 11, 21 ; 22 ; 31, 32) présente une zone de connexion (4, 5 ; 14, 15 ; 24 ; 34, 35) en matériau doux non durci pour l'écrasement.

2. Procédé selon la revendication 1, **caractérisé en ce que** l'au moins une zone de connexion douce (4, 5 ; 14, 15 ; 24 ; 34, 35) est durcie après l'assemblage.

3. Procédé selon la revendication 1 ou 2, **caractérisé en ce qu'**une première extrémité de profilé creux (24) est poussée par engagement par correspondance de forme sur la deuxième extrémité de profilé creux (25), la première extrémité de profilé creux (24) présentant la zone de connexion douce.

4. Procédé selon la revendication 1 ou 2, **caractérisé en ce qu'**une première extrémité de profilé creux (34) est poussée par engagement par correspondance de forme sur la deuxième extrémité de profilé creux (35), les deux extrémités de profilés creux (34, 35) présentant chacune une zone de connexion douce.

5. Procédé selon la revendication 1 ou 2, **caractérisé en ce qu'**une première extrémité de profilé creux (4, 11) et une deuxième extrémité de profilé creux (5, 12) sont poussées par engagement par correspondance de forme sur un adaptateur de connexion (3, 13) ou sont enfoncées dans un adaptateur de connexion (3, 13) et sont écrasées dans la région de l'adaptateur de connexion (3, 13), l'adaptateur (3, 13) se composant d'acier doux "normal" et les extrémités de profilés creux (4, 5 ; 11, 12) présentant chacune une zone de connexion douce.

6. Procédé selon la revendication 1 ou 2, **caractérisé en ce qu'**une première extrémité de profilé creux (11) et une deuxième extrémité de profilé creux (12) sont poussées par engagement par correspondance de forme sur un adaptateur de connexion ou sont enfoncées dans un adaptateur de connexion (13) et sont écrasées dans la région de l'adaptateur de connexion (13), l'adaptateur se composant d'acier pouvant être trempé, en particulier d'acier au bore, et étant amené à la température d'austénisation avant l'assemblage et étant trempé et par conséquent durci lors de l'assemblage.

7. Procédé selon la revendication 1 ou 2, **caractérisé en ce qu'**une première extrémité de profilé creux (4) et une deuxième extrémité de profilé creux (5) sont poussées par engagement par correspondance de forme sur un adaptateur de connexion ou sont enfoncées dans un adaptateur de connexion (3) et sont écrasées dans la région de l'adaptateur de connexion (3), l'adaptateur (3) se composant également d'acier de haute résistance et les extrémités de profilés creux (4, 5) ainsi que l'adaptateur (3) présentant chacun des zones de connexion douces.

8. Procédé selon l'une quelconque des revendications précédentes,
**caractérisé en ce**
**qu'**un adhésif (26) est en outre appliqué dans la région de l'au moins une zone de connexion douce (24).

9. Procédé selon la revendication 8, **caractérisé en ce que** l'adhésif est appliqué sous la forme de bandes de colle adhésives sur les extrémités de profilés creux.
